# EUROPÄISCHE PATENTANMELDUNG

(11) **EP 4 767 815 A1**
(43) Veröffentlichungstag der Anmeldung: **01.07.2026**
(21) Anmeldenummer: 25222859.8
(22) Anmeldetag: 12.12.2025
(51) Int. Cl.: A01G 25/16

(54) **VORRICHTUNG ZUM ERMITTELN EINES ENDES EINES BEWÄSSERUNGSVORGANGS EINES BEWÄSSERUNGSSYSTEMS, AUSLASSEINHEIT FÜR EIN BEWÄSSERUNGSSYSTEM, BEWÄSSERUNGSSYSTEM UND VERFAHREN ZUM BETREIBEN EINES BEWÄSSERUNGSSYSTEMS**

(30) Priorität: 17.12.2024 DE 102024138210
(71) Anmelder: Werwer, Hans, 46282 Dorsten (DE)
(72) Erfinder: Werwer, Hans, 46282 Dorsten (DE)
(74) Vertreter: Schatz, Markus Franz-Josef

(57) **Zusammenfassung**

Die Erfindung betrifft eine Vorrichtung (4) zum Ermitteln eines Endes eines Bewässerungsvorgangs eines Bewässerungssystems (1), das wenigstens eine eingangsseitig mit einer betätigbaren Armatur (15) verbundene Wasserhauptleitung (2) und wenigstens eine mit der Wasserhauptleitung (2) verbundene und/oder in die Wasserhauptleitung (2) integrierte Auslasseinheit (3) aufweist. Die Vorrichtung (4) weist eine an der Auslasseinheit (3, 3a, 3b, 3c, 3d) oder der Wasserhauptleitung (2) anordbare Druckmesseinrichtung (6), mit der ein Druck in der Wasserhauptleitung (2) messbar ist, eine an der Auslasseinheit (3, 3a, 3b, 3c, 3d) oder der Wasserhauptleitung (2) anordbare Durchflussmesseinrichtung (7), mit der ein Wasserdurchfluss durch die Wasserhauptleitung (2) messbar ist, und eine Auswerteelektronik (9) auf, die eingerichtet ist, ein elektrisches Endsignal zu erzeugen, wenn der Druck in der Wasserhauptleitung (2) und der Wasserdurchfluss durch die Wasserhauptleitung (2) gleichzeitig fallen und/oder jeweils unter dem jeweilig vorgegebenen Mindestgrenzwert liegen und/oder wenn ein Druckverlauf und/oder ein Durchflussverlauf einer vorgegebenen Endabfolge von Druck- und/oder Durchflussschwankungen entsprechen bzw. entspricht.

## Beschreibung

### Technisches Gebiet

Die Erfindung betrifft eine Vorrichtung zum Ermitteln eines Endes eines Bewässerungsvorgangs eines Bewässerungssystems, das wenigstens eine eingangsseitig mit einer betätigbaren Armatur verbundene Wasserhauptleitung und wenigstens eine mit der Wasserhauptleitung verbundene und/oder in die Wasserhauptleitung integrierte Auslasseinheit aufweist. Darüber hinaus betrifft die Erfindung eine Auslasseinheit für ein Bewässerungssystem, das wenigstens eine eingangsseitig mit einer betätigbaren Armatur verbundene Wasserhauptleitung aufweist, mit der die Auslasseinheit verbindbar und/oder in die die Auslasseinheit integrierbar ist. Zudem betrifft die Erfindung ein Bewässerungssystem mit einer eingangsseitig mit einer betätigbaren Armatur verbundene Wasserhauptleitung und wenigstens einer mit der Wasserhauptleitung verbundenen und/oder in die Wasserhauptleitung integrierten Auslasseinheiten. Ferner betrifft die Erfindung ein Verfahren zum Betreiben eines Bewässerungssystems, das wenigstens eine eingangsseitig mit einer betätigbaren Armatur verbundene Wasserhauptleitung und wenigstens eine mit der Wasserhauptleitung verbundene und/oder in die Wasserhauptleitung integrierte Auslasseinheiten aufweist.

### Stand der Technik

Bewässerungssysteme der eingangs genannten Art sind in verschiedenen Ausführungsformen bekannt. Mit einem solchen Bewässerungssystem kann eine Bewässerung durch ein sequenzielles Öffnen von einzelnen Auslasseinheiten des Bewässerungssystems erfolgen, die in Reihe an einer einzigen Wasserhauptleitung des Bewässerungssystems angeordnet sind bzw. von dieser abzweigen. Am Ende eines solchen Bewässerungsvorgangs in Form einer Bewässerungssequenz, was beispielsweise durch ein Schließen einer eingangsseitig mit der Wasserhauptleitung verbundenen Zulaufarmatur bewirkt wird, werden die Auslasseinheiten üblicherweise automatisch in ihre Ausgangszustände zurückgesetzt, in denen die Auslasseinheiten geschlossen sind.

Es ist also für einen Betrieb eines solchen Bewässerungssystems wichtig, das Ende des Bewässerungsvorgangs bzw. der Bewässerungssequenz automatisch bzw. elektronisch zu erkennen.

Zum Erkennen des Endes einer solchen Bewässerungssequenz ist es bekannt, den Druck in der Wasserhauptleitung zu messen und aus einem sinkenden Druck bzw. dem Sinken des Drucks unter einen vorgegebenen Grenzwert auf das Vorliegen des Endes der Bewässerungssequenz zu schließen.

Wenn aber Wasser aus einer Auslasseinheit frei austreten kann, wird der Druck in der Wasserhauptleitung fallen, obwohl die eingangsseitig mit der Wasserhauptleitung verbundene Zulaufarmatur geöffnet ist. Wenn die Wasserhauptleitung an einem Hang nach unten verlegt ist, kann zudem das in der Wasserhauptleitung herabstürzende Wasser sogar einen Unterdruck in der Wasserhauptleitung verursachen, obwohl die Zulaufarmatur geöffnet ist. Wenn Wasser an einem Hang in der Wasserhauptleitung steht, kann darüber hinaus in dem geodätisch am tiefsten angeordneten Abschnitt der Wasserhauptleitung ein Druck vorhanden sein, obwohl die Zulaufarmatur geschlossen ist und der Druck über wenigstens eine Auslasseinheit aus der Wasserhauptleitung abgelassen sein sollte.

Daraus folgt, dass es bei der Auswertung des in der Wasserhauptleitung herrschenden Drucks zur Ermittlung des Endes einer Bewässerungssequenz zu Fehlern kommen kann. Dies macht die Ermittlung des Endes der Bewässerungssequenz also fehlerhaft bzw. ungenau, was wiederum zu einer Unzufriedenheit bei Nutzern eines solchen Bewässerungssystems führen kann.

Es ist bekannt, den Druck in der Wasserhauptleitung aufrechtzuerhalten, indem der Wasserfluss durch die Wasserhauptleitung absichtlich behindert wird. Gemäß DE 2 847 804 A1 wird hierzu ein Fließbegrenzer verwendet, der einen Rückdruck erzeugt. Gemäß US 5 207 354 A wird hierzu hingegen eine Art Überströmventiltechnik genutzt wird. Hierdurch kann eine Drucküberwachung eventuell unempfindlicher gegen Druckschwankungen gemacht werden, jedoch verringern diese Maßnahmen den Druck und den Wasserdurchfluss an jeder Auslasseinheit erheblich. Gerade, wenn mehrere Auslasseinheiten in Reihe an einer Wasserhauptleitung montiert werden sollen, ist das absichtliche Behindern des Wasserdurchflusses durch die Wasserhauptleitung nachteilig.

Gemäß GB 2 597 259 A wird das Ende einer Bewässerungssequenz aus einem nachlassenden Wasserdurchfluss durch die Wasserhauptleitung ermittelt. Ein geringer werdender Wasserdurchfluss durch die Wasserhauptleitung kann auf das Abstellen des Wassers an der Zulaufarmatur hindeuten. Ein geringer Wasserdurchfluss kann aber auch darauf hindeuten, dass an einer Auslasseinheit eine sehr geringer Wasserauslass erfolgt. Dadurch handelt es sich bei dem Wasserdurchfluss ebenfalls um keinen sicheren Indikator dafür, dass das Ende einer Bewässerungssequenz gegeben ist.

In einem Bewässerungssystem schwanken also Druck und Wasserdurchfluss durch die Wasserhauptleitung des Bewässerungssystems aufgrund verschiedener Ursachen unter Umständen erheblich. Daher kommt es zwangsläufig bei einer Berücksichtigung des Drucks oder des Wasserdurchflusses durch die Wasserhauptleitung zu nachteiligen Fehlentscheidungen bei der Ermittlung des Endes eines Bewässerungsvorgangs bzw. einer Bewässerungssequenz, wodurch das ganze Bewässerungssystem gestört werden kann, so dass ein gewünschter Bewässerungsvorgang bzw. eine gewünschte Bewässerungssequenz nur schlecht oder gar nicht mehr durchführbar ist.

### Offenbarung der Erfindung

Eine Aufgabe der Erfindung ist es, ein Bewässerungssystem der eingangs genannten Art bereitzustellen, mit dem ein Ende eines Bewässerungsvorgangs zuverlässig und fehlerfrei ermittelbar ist.

Diese Aufgabe wird durch die unabhängigen Patentansprüche gelöst. Vorteilhafte Ausgestaltungen sind in den abhängigen Patentansprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können. Vorteilhafte Ausgestaltungen der Vorrichtung können dabei vorteilhaften Ausgestaltungen des Verfahrens entsprechen, und umgekehrt, auch wenn hierauf im Folgenden nicht explizit hingewiesen wird.

Eine erfindungsgemäße Vorrichtung zum Ermitteln eines Endes eines Bewässerungsvorgangs eines Bewässerungssystems, das wenigstens eine eingangsseitig mit einer betätigbaren Armatur verbundene Wasserhauptleitung und wenigstens eine mit der Wasserhauptleitung verbundene und/oder in die Wasserhauptleitung integrierte Auslasseinheiten aufweist, weist wenigstens eine an der Auslasseinheit oder der Wasserhauptleitung anordbare Druckmesseinrichtung, mit der ein Druck in der Wasserhauptleitung messbar ist, wenigstens eine an der Auslasseinheit oder der Wasserhauptleitung anordbare Durchflussmesseinrichtung, mit der ein Wasserdurchfluss durch die Wasserhauptleitung messbar ist, und wenigstens eine Auswerteelektronik auf, die eingerichtet ist, aus Messsignalen der Druckmesseinrichtung und der Durchflussmesseinrichtung zu ermitteln, ob der Druck in der Wasserhauptleitung und der Wasserdurchfluss durch die Wasserhauptleitung gleichzeitig fallen und/oder jeweils unter einem jeweilig vorgegebenen Mindestgrenzwert liegen und/oder ob ein Druckverlauf und/oder ein Durchflussverlauf einer vorgegebenen Endabfolge von Druck- und/oder Durchflussschwankungen entsprechen bzw. entspricht, und ein elektrisches Endsignal zu erzeugen, wenn der Druck in der Wasserhauptleitung und der Wasserdurchfluss durch die Wasserhauptleitung gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht.

Das Bewässerungssystem kann auch zwei oder mehr Auslasseinheiten aufweisen, die mit der Wasserhauptleitung verbunden und/oder in die Hauptwasserleitung integriert sind. Dabei sind die Auslasseinheiten bezüglich einer Wasserströmung durch die Wasserhauptleitung in Reihe zueinander geschaltet sind.

Wenn eine mit einem Bewässerungssystems mit wenigstens zwei Auslasseinheiten eingangsseitig verbundene Zulaufarmatur geöffnet wird, strömt Wasser durch die Wasserhauptleitung des Bewässerungssystems bis zu einer zuerst geöffneten bzw. zu öffnenden Auslasseinheit des Bewässerungssystems. Das Wasser wird über diese Auslasseinheit aus dem Bewässerungssystem in die Umgebung abgeleitet oder einer an die Auslasseinheit angeschlossenen Wasserabgabeeinheit, beispielsweise einem Regner oder dergleichen, zugeführt. Dabei schließt die Auslasseinheit gleichzeitig die Wasserhauptleitung, so dass das Wasser nicht zu der nächsten Auslasseinheit des Bewässerungssystems fließen kann, solange das Wasser über die zuerst geöffnete Auslasseinheit aus der Wasserhauptleitung abgeleitet wird. Nach Ablauf eines vorgegebenen Zeitraums oder einer vorgegebenen Wassermenge kann die zuerst geöffnete Auslasseinheit schalten oder geschaltet werden, um das Wasser nicht mehr aus der Wasserhauptleitung abzuführen, sondern um die Wasserhauptleitung freizugeben, so dass das Wasser über die Wasserhauptleitung einer weiteren Auslasseinheit des Bewässerungssystems zugeführt werden kann, die als nächstes geöffnet werden soll. Diese weitere Auslasseinheit kann dann entsprechend zum Ableiten von Wasser aus der Wasserhauptleitung verwendet werden. Nachdem die letzte Auslasseinheit des Bewässerungssystems einen entsprechenden Wasserableitungsvorgang abgeschlossen hat, werden alle Auslasseinheiten wieder in ihre Ausgangszustände zurückversetzt, was durch das Schließen der Zulaufarmatur ausgelöst oder bewirkt werden kann. Damit ist dann ein Bewässerungsvorgang in Form einer Bewässerungssequenz des Bewässerungssystems abgeschlossen. Gegebenenfalls kann nach dem Schließen der Zulaufarmatur noch eine Druckentlastung am mit der Zulaufarmatur verbundenen Anfang der Wasserhauptleitung aktiv durchgeführt werden, beispielsweise über wenigstens ein an der Wasserhauptleitung angeordnetes, ansteuerbares Ablassventil. Alternativ kann eine passive Druckentlastung über eventuell vorhandene minimale Undichtigkeiten des Bewässerungssystems erfolgen.

Eine mit der erfindungsgemäßen Vorrichtung ausgestattete Auslasseinheit kann autark und automatisch schalten, um für eine oben beschriebene Bewässerungssequenz verwendbar zu sein. Ein mit solchen Auslasseinheiten ausgestattetes Bewässerungssystem kann daher ohne eine zentrale Steuerung und/oder Regelung auskommen, was unter anderem Kosten spart.

Ein gattungsgemäßes Bewässerungssystems kann beispielsweise eine einzige Wasserhauptleitung aufweisen, die beispielsweise in einem Garten verlegt werden kann. An Stellen, an denen eine Bewässerung benötigt wird, kann, beispielsweise auch nachträglich, an der Wasserhauptleitung eine Auslasseinheit angeordnet werden, insbesondere in die Wasserhauptleitung integriert werden. So kann das Bewässerungssystem auch nachträglich durch weitere Auslasseinheiten erweitert werden oder es können einzelne Auslasseinheiten nachträglich wieder entfernt werden, ohne dass irgendwelche Anpassungen am übrigen Bewässerungssystems erforderlich sind. Dadurch können mit einer einzigen Wasserhauptleitung völlig unterschiedliche Bewässerungsauslässe mit Wasser versorgt werden, um verschiedenen Bewässerungsansprüchen genügen zu können, und zwar insbesondere von einer Tröpfchenbewässerung über Regner bis hin zu einem freien Auslauf.

Dabei kann auch an einem bestehenden herkömmlichen Bewässerungssystem an einer Wasserhauptleitung in Form einer Zuleitung zu Regnern oder anderen Bewässerungseinrichtungen unter Verwendung einer Auslasseinheit ein Abzweig eingerichtet werden, indem die Auslasseinheit mit der Wasserhauptleitung verbunden und/oder in die Wasserhauptleitung integriert wird. Hierbei sollte an einer eventuell vorhandenen Bewässerungssteuerung des Bewässerungssystems lediglich eine Dauer eines Bewässerungszeitraums oder eine abzugebende Wassermenge des herkömmlichen Bewässerungssystems um eine Dauer des Bewässerungzeitraums bzw. eine Wassermenge, die an der Auslasseinheit eingestellt worden ist, verlängert werden.

Bei einem Bewässerungssystem mit zwei oder mehr Auslasseinheiten können an einer einzigen Wasserhauptleitung mittels der Auslasseinheiten Bewässerungsauslässe an verschiedenen Höhenlagen realisiert werden, weil bei der Durchführung einer oben beschriebenen Bewässerungssequenz immer nur eine Auslasseinheit für eine Bewässerung geöffnet ist, so dass auch an der geodätisch am höchsten angeordneten Auslasseinheit der Druck und die Wassermenge so zu Verfügung stehen, als wenn für jede Höhenlage einzelne Wasserleitungen gelegt worden wären.

Um das Abstellen des Wasserzulaufs bzw. das Schließen der Zulaufarmatur und damit das Ende eines Bewässerungsvorgangs bzw. einer Bewässerungssequenz sicher zu erkennen, werden erfindungsgemäß der Druck in der Wasserhauptleitung und der Wasserdurchfluss durch die Wasserhauptleitung unabhängig voneinander überwacht bzw. gemessen, ohne den Druck und Wasserdurchfluss mehr als für die reine Messung erforderlich zu beeinflussen.

Solange die Zulaufarmatur geöffnet ist, korrelieren der Druck und der Wasserdurchfluss in der Wasserhauptleitung negativ zueinander. Das bedeutet, dass dann, wenn bei kontinuierlichem Wasserzulauf an einer geöffneten Auslasseinheit nur wenig Wasser ausströmen kann, der Wasserdurchfluss in der Wasserhauptleitung gering ist, der Druck in der Wasserhauptleitung aber tendenziell hoch ist. Eine solche Situation kann beispielweise gegeben sein, wenn an die Auslasseinheit nur eine kurze Tröpfchenbewässerung angeschlossen ist. Wenn andererseits bei kontinuierlichem Wasserzulauf an einer geöffneten Auslasseinheit das Wasser frei austreten kann, ist der Druck in der Wasserhauptleitung geringer, während der Wasserdurchfluss durch die Wasserhauptleitung tendenziell hoch ist.

Nur das Abstellen des Wasserzulaufs bzw. das Schließen der Zulaufarmatur kann diese negative Korrelation zwischen dem Druck in der Wasserhauptleitung und dem Wasserdurchfluss durch die Wasserhauptleitung aufheben. Dies kann dann mit der erfindungsgemäßen Vorrichtung zuverlässig ermittelt werden, da diese nicht nur den Druck in der Wasserhauptleitung oder nur den Wasserdurchfluss durch die Wasserhauptleitung berücksichtigt, wie es im Stand der Technik der Fall ist.

Die an der Auslasseinheit oder der Wasserhauptleitung anordbare Druckmesseinrichtung kann beispielsweise als elektronische Druckmesseinrichtung ausgebildet sein, die Druckmesswerte erzeugen und an die Auswerteelektronik abgeben kann. Alternativ kann die Druckmesseinrichtung ein mechanisches Messprinzip anwenden, um Druckmesswerte erzeugen und an die Auswerteelektronik abgeben zu können.

Die an der Auslasseinheit oder der Wasserhauptleitung anordbare Durchflussmesseinrichtung kann beispielsweise als elektronisches Durchflusszähler ausgebildet sein, der Durchflussmesswerte erzeugen und an die Auswerteelektronik abgeben kann. Alternativ kann die Durchflussmesseinrichtung ein mechanisches Messprinzip anwenden, um Durchflussmesswerte erzeugen und an die Auswerteelektronik abgeben zu können.

Mit Hilfe der Durchflussmesseinrichtung kann nicht nur die Dauer, sondern auch eine gewünschte Wassermenge für die jeweilige Auslasseinheit eingestellt werden, wenn während eines Bewässerungsvorgangs in Form einer Bewässerungssequenz immer nur eine Auslasseinheit geöffnet ist. Auch einstellbare Kombinationen von Bewässerungsdauer und Wassermenge sind denkbar. Beispielsweise könnte eine maximale Bewässerungsdauer von 1 Stunde und eine maximale Wassermenge von 100 L an der Auswerteelektronik der Vorrichtung eingestellt bzw. vorgegeben werden, so dass die Bewässerung über eine Auslasseinheit gestoppt wird, wenn einer dieser Werte überschritten wird. Ein mögliches Ergebnis wäre beispielsweise, dass die Bewässerung nach 10 min und Abgabe von 100 L gestoppt werden würde. Wenn einem an eine Anschlusseinheit angeschlossenen Verbraucher, der planmäßig 80 L/Stunde verbraucht, eine Bewässerungsdauer von einer Stunde zugewiesen worden ist, aber ein Schlauch zwischen der Auslasseinheit und dem Verbraucher abgeplatzt ist, wäre die verlorengegangene Wassermenge auf 100 L begrenzt.

Die Auswerteelektronik kann beispielsweise als digitale Steuerung und/oder Regelung ausgebildet sein. Die Auswerteelektronik kann wenigstens eine Datenverarbeitungseinheit aufweisen, auf der ein Algorithmus bzw. eine Software ausführbar ist, die eingerichtet ist, aus Messsignalen der Druckmesseinrichtung und der Durchflussmesseinrichtung zu ermitteln, ob der Druck in der Wasserhauptleitung und der Wasserdurchfluss durch die Wasserhauptleitung gleichzeitig fallen und/oder jeweils unter einem jeweilig vorgegebenen Mindestgrenzwert liegen und/oder ob ein Druckverlauf und/oder ein Durchflussverlauf einer vorgegebenen Endabfolge von Druck- und/oder Durchflussschwankungen entsprechen bzw. entspricht, und ein elektrisches Endsignal zu erzeugen, wenn der Druck in der Wasserhauptleitung und der Wasserdurchfluss durch die Wasserhauptleitung gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht. Hierbei kann die Auswerteelektronik insbesondere eingerichtet sein, die Messsignale der Druckmesseinrichtung und der Durchflussmesseinrichtung mit einem jeweils vorgegebenen bzw. gespeicherten Wert, beispielsweise einem Mindestdruckgrenzwert bzw. einem Mindestdurchflussgrenzwert, zu vergleichen bzw. die Messsignale der Druckmesseinrichtung und der Durchflussmesseinrichtung mit der vorgegebenen bzw. gespeicherten Endabfolge von Druck- und/oder Durchflussschwankungen zu vergleichen. Hierzu kann die Auswerteelektronik wenigstens einen Datenspeicher zum Speichern der vorgenannten Daten aufweisen. Die Auswerteelektronik kann zudem eingerichtet sein, Informationen und/oder Steuerbefehle an eine Ventileinrichtung einer Auslasseinheit und/oder an weitere Geräte auszugeben.

Während jedes Bewässerungsvorgangs in Form einer oben beschriebenen Bewässerungssequenz wird an jeder Auslasseinheit eines Bewässerungssystems eine bestimmte Abfolge von Schwankungen der Druck- und Durchflussmenge auftreten. Zu Beginn einer Bewässerungssequenz kommt es nach dem Öffnen der Zulaufarmatur zu einem Druckanstieg in der Hauptwasserleitung, was mittels der jeweiligen Druckmesseinrichtung als Druckschwankung erfassbar ist. Durch das Öffnen und Schließen von Ventilen einer Auslasseinheit werden ebenfalls Druck- und Durchflussschwankungen erzeugt. Jeder Schaltvorgang eines der Auslasseinheiten gemäß der Bewässerungssequenz erzeugt ebenfalls Druck- und Durchflussschwankungen. Diese Abfolge von Druck- und Durchflussschwankungen gleicht einer Signatur des Bewässerungssystems. Beim ersten Start eines Bewässerungssystems oder nach Änderungen im Bewässerungssystem kann die Abfolge von Druck- und/oder Durchflussschwankungen aufgezeichnet werden. Bei einem unverändertem Bewässerungssystem kann bei folgenden Bewässerungssequenzen mit Hilfe dieser Signatur das Ende des Bewässerungsvorgangs in Form der Bewässerungssequenz ermittelt werden, alternativ oder als zusätzliches Kriterium zum Ermitteln des Endes des Bewässerungsvorgangs. Die Signatur kann von der erfindungsgemäßen Vorrichtung als Endabfolge von Druck- und/oder Durchflussschwankungen verwendet werden.

Die erfindungsgemäße Vorrichtung kann mit einer mit der Wasserhauptleitung verbundenen bzw. verbindbaren und/oder in die Wasserhauptleitung integrierten bzw. integrierbaren Auslasseinheit zu einer Baugruppe kombiniert werden, wobei über die Auslasseinheit bei Bedarf gezielt Wasser aus der Wasserhauptleitung abgeleitet werden kann.

Gemäß einer vorteilhaften Ausgestaltung ist die Auswerteelektronik eingerichtet, aus Messsignalen der Druckmesseinrichtung und der Durchflussmesseinrichtung zu ermitteln, ob der Druck in der Wasserhauptleitung und der Wasserdurchfluss durch die Wasserhauptleitung gleichzeitig steigen und/oder jeweils über einem jeweilig vorgegebenen Startgrenzwert liegen, und ein elektrisches Startsignal zu erzeugen, wenn der Druck in der Wasserhauptleitung und der Wasserdurchfluss durch die Wasserhauptleitung gleichzeitig steigen und/oder jeweils über dem jeweilig vorgegebenen Startgrenzwert liegen. Hierdurch wird die Vorrichtung in die Lage versetzt, auch einen Start eines mit dem Bewässerungssystem durchzuführenden Bewässerungsvorgangs zuverlässig zu ermitteln. Die Auswerteelektronik kann wenigstens eine Datenverarbeitungseinheit aufweisen, auf der ein Algorithmus bzw. eine Software ausführbar ist, die eingerichtet ist, aus Messsignalen der Druckmesseinrichtung und der Durchflussmesseinrichtung zu ermitteln, ob der Druck in der Wasserhauptleitung und der Wasserdurchfluss durch die Wasserhauptleitung gleichzeitig steigen und/oder jeweils über einem jeweilig vorgegebenen Startgrenzwert liegen, und ein elektrisches Startsignal zu erzeugen, wenn der Druck in der Wasserhauptleitung und der Wasserdurchfluss durch die Wasserhauptleitung gleichzeitig steigen und/oder jeweils über dem jeweilig vorgegebenen Startgrenzwert liegen. Hierbei kann die Auswerteelektronik insbesondere eingerichtet sein, die Messsignale der Druckmesseinrichtung und der Durchflussmesseinrichtung mit einem jeweils vorgegebenen bzw. gespeicherten Wert, beispielsweise einem Startdruckgrenzwert bzw. einem Startdurchflussgrenzwert, zu vergleichen. Hierzu kann die Auswerteelektronik wenigstens einen Datenspeicher zum Speichern der vorgenannten Daten aufweisen. Die Auswerteelektronik kann zudem eingerichtet sein, mit der Erzeugung des Startsignals eine Zeitmessung zu beginnen, um mit dem Bewässerungssystem eine Bewässerung über einen vorgegebenen Zeitraum durchführen zu können. Die Auswerteelektronik kann darüber hinaus eingerichtet sein, mit der Erzeugung des Startsignals eine Mengenmessung zu beginnen, um mit dem Bewässerungssystem eine Abgabe einer vorgegebenen Wassermenge durchführen zu können.

Alternativ oder additiv kann die Auswerteelektronik eingerichtet sein, aus Messsignalen der Druckmesseinrichtung und der Durchflussmesseinrichtung zu ermitteln, ob der Druck in der Wasserhauptleitung steigt oder über einem vorgegebenen Startgrenzwert liegt und gleichzeitig der Wasserdurchfluss durch die Wasserhauptleitung unter einem vorgegebenen Grenzwert liegt, und ein elektrisches Startsignal zu erzeugen, wenn der Druck in der Wasserhauptleitung steigt oder über einem vorgegebenen Startgrenzwert liegt und gleichzeitig der Wasserdurchfluss durch die Wasserhauptleitung unter einem vorgegebenen Grenzwert liegt. Ist keine mit der Wasserhauptleitung verbundene Auslasseinheit geöffnet, kann nach dem Öffnen der Zulaufarmatur kein Durchfluss durch die Wasserhauptleitung gegeben sein, wobei jedoch der Druck in der Wasserhauptleitung ansteigt. Der steigende Druck kann also von der Auswerteelektronik verwendet werden, um den Start eines Bewässerungsvorgangs zu ermitteln. Alternativ kann auf den Beginn eines Bewässerungsvorgangs geschlossen werden, wenn der gemessene Druck über dem vorgegebenen Startgrenzwert liegt. Der vorgegebene Startgrenzwert für den Durchfluss kann beispielsweise gleich Null sein.

Alternativ oder additiv kann die Auswerteelektronik eingerichtet sein, aus Messsignalen der Druckmesseinrichtung und der Durchflussmesseinrichtung zu ermitteln, ob der Durchfluss durch die Wasserhauptleitung steigt oder über einem vorgegebenen Startgrenzwert liegt und gleichzeitig der Druck in der Wasserhauptleitung unter einem vorgegebenen Grenzwert liegt, und ein elektrisches Startsignal zu erzeugen, wenn der Durchfluss durch die Wasserhauptleitung steigt oder über einem vorgegebenen Startgrenzwert liegt und gleichzeitig der Druck in der Wasserhauptleitung unter einem vorgegebenen Grenzwert liegt. Kann Wasser über wenigstens eine geöffnete Auslasseinheit frei aus der Wasserhauptleitung abfließen, wird nach dem Öffnen der Zulaufarmatur kein oder ein nur relativ geringer Druck in der Wasserhauptleitung auftreten, wobei jedoch der Durchfluss durch die Wasserhauptleitung ansteigt. Der steigende Durchfluss kann also von der Auswerteelektronik verwendet werden, um den Start eines Bewässerungsvorgangs zu ermitteln. Alternativ kann auf den Beginn eines Bewässerungsvorgangs geschlossen werden, wenn der gemessene Durchfluss über dem vorgegebenen Startgrenzwert liegt.

Gemäß einer weiteren vorteilhaften Ausgestaltung weist die Vorrichtung wenigstens eine mit der Auswerteelektronik verbundene Mensch-Maschine-Schnittstelle und/oder wenigstens eine mit der Auswerteelektronik verbundene Anzeigeeinheit auf. Über die Mensch-Maschine-Schnittstelle kann die Auswerteelektronik bzw. die Vorrichtung eingestellt werden, beispielsweise um Grenzwerte für den Druck und den Durchfluss eingeben bzw. vorgeben zu können. Die Mensch-Maschine-Schnittstelle kann beispielsweise wenigstens einen Eingabeknopf und/oder wenigstens einen Drehknopf mit einer Skala und/oder wenigstens eine Eingabetaste und/oder wenigstens einen Schalter und/oder wenigstens einen Touchscreen aufweisen. An der Anzeigeeinheit kann beispielsweise die Einstellung der Vorrichtung abgelesen werden. Alternativ oder additiv können an der Anzeigeeinheit aktuelle Messwerte abgelesen werden. Die Anzeigeeinheit kann wenigstens ein Display oder wenigstens einen Touchscreen aufweisen. Alternativ oder additiv kann die Vorrichtung wenigstens einen Lautsprecher (Piepser) aufweisen, um akustische Signale erzeugen zu können.

Gemäß einer weiteren vorteilhaften Ausgestaltung weist die Auswerteelektronik eine Zeitmessfunktion und/oder eine Uhrfunktion und/oder eine Kalenderfunktion auf. Über die Zeitmessfunktion kann die Auswerteelektronik eingerichtet sein, eine mit der entsprechend ausgestatteten Auslasseinheit realisierten Bewässerungszeit zu messen und/oder eine über die Auslasseinheit erfolgende Wasserabgabe (z.B. L/min) zu ermitteln. Über die Uhrfunktion kann die Auswerteelektronik eingerichtet sein, Bewässerungen in Abhängigkeit von der Tageszeit und vorgegebenen bzw. einstellbaren Bewässerungsuhrzeiten durchzuführen. Über die Kalenderfunktion kann die Auswerteelektronik eingerichtet sein, Bewässerungen an einstellbaren und ausgewählten Wochentagen durchzuführen.

Gemäß einer weiteren vorteilhaften Ausgestaltung weist die Vorrichtung wenigstens eine elektrische Energiequelle auf. Mittels der Energiequelle sind elektrische Bauteile der Vorrichtung mit elektrischer Energie versorgbar. Die Energiequelle kann beispielsweise eine Sekundärbatterie sein.

Gemäß einer weiteren vorteilhaften Ausgestaltung weist die Vorrichtung wenigstens ein mit der Auswerteelektronik verbundenes Funkmodul und/oder wenigstens ein mit der Auswerteelektronik verbundene Netzwerkmodul und/oder wenigstens einen Anschluss zum Anschließen einer externen elektrischen Einrichtung an die Vorrichtung auf. Das Funkmodul kann zum Verbinden der Auswerteelektronik mit externen Einheiten, wie beispielsweise Sensoren, Schaltern oder einer Mensch-Maschine-Schnittstelle verwendet werden. Alternativ oder additiv kann das Funkmodul für eine unidirektionale oder bidirektionale Datenübertragung verwendet werden. Das Netzwerkmodul kann ein kabelgebundenes oder kabelloses Modul sein und zum Vernetzen der Vorrichtung mit weiteren Komponenten, beispielsweise einer zentralen Steuerung und/oder Regelung eines Bewässerungssystems oder anderweitiger Geräte sein. Der Anschluss kann beispielsweise Signale von externen Sensoren oder Schaltern aufnehmen. Der Anschluss kann zum Anschließen von wenigstens einem externen elektrischen Gerät dienen, wie beispielsweise einem Sensor, einem Schalter, einer Stromversorgung, einer Mensch-Maschine-Schnittstelle oder dergleichen sein. Alternativ kann der Anschluss zur Datenübertragung verwendet werden. Beispielsweise kann der Auswerteelektronik über den Anschluss ein Auslösersignal von extern zugeführt werden, das zum Schalten einer mit der Vorrichtung ausgestatteten Auslasseinheit verwendet werden kann. Das Auslösersignal kann beispielsweise das Ablaufen einer Zeit für einen mit einer Auslasseinheit durchgeführten Bewässerungsvorgang oder eine durch die Auslasseinheit durchgeflossene Wassermenge sein. Das Auslösersignal kann beispielsweise von einem Bodenfeuchtesensor, einem Füllstandssensor für einen Teich, einem Regensensor, einem manuellen Schalter oder dergleichen stammen, der über den Anschluss mit der Auswerteelektronik verbunden werden kann.

Gemäß einer weiteren vorteilhaften Ausgestaltung ist die Auswerteelektronik eingerichtet, in einem Anlernmodus betrieben zu werden, in dem die Auswerteelektronik während eines Startzeitraums des Bewässerungsvorgangs und/oder eines Endzeitraums des Bewässerungsvorgangs eine Abfolge von Druck- und/oder Durchflussschwankungen elektronisch speichert. Um das Ermitteln des Starts oder des Endes eines mit dem Bewässerungssystem durchgeführten Bewässerungsvorgangs unter allen Bedingungen sicherstellen zu können, sollte die Vorrichtung justierbar sein. Diese Justierung betrifft die vorgegebenen Werte für Druck und Durchfluss, die für die Ermittlung des Starts bzw. des Endes eines mit dem Bewässerungssystem durchgeführten Bewässerungsvorgangs von der Auswerteelektronik verwendet werden. Diese Werte können für viele Bedingungen mit durchschnittlichem Druck und Zulauf des Wassers voreingestellt sein. Es kann aber auch Situationen geben, in denen der Start bzw. das Ende eines mit dem Bewässerungssystem durchgeführten Bewässerungsvorgangs nicht mit den normalerweise zu erwartenden Werten bestimmt werden kann. Oder es könnte lange dauern, bis der Start bzw. das Ende des mit dem Bewässerungssystem durchgeführten Bewässerungsvorgangs erkannt wird, beispielsweise bei großen Höhenunterschieden, geringer Wasserzufuhr oder dergleichen. Für diesen Fall sollte eine Möglichkeit geschaffen werden, die Vorrichtung auf den Druck und den Durchfluss, die den Start bzw. das Ende eines mit dem Bewässerungssystem durchgeführten Bewässerungsvorgangs signalisieren, neu einzustellen. Es ist dann also vorteilhaft, die Vorrichtung bzw. deren Werte bzw. Parameter im Zuge eines Anlernvorgangs zu justieren. Zum Anlernen der Startwerte von Druck und Durchfluss kann der Zulauf geöffnet werden. Die einzelnen Auslasseinheiten zugeordneten Vorrichtungen, die den Start des Bewässerungsvorgangs nicht durch die überwachten Werte für Druck und/oder Durchfluss erkennen, können durch einen manuellen Befehl, wie beispielsweise durch Drücken eines Anlernknopfes, die während des Starts des Bewässerungsvorgangs an der jeweiligen Stelle des Bewässerungssystems herrschenden Werte speichern. In Zukunft kann die Auswerteelektronik der jeweiligen Vorrichtung dann bei Erreichen der gespeicherten Werte den Start eines Bewässerungsvorgangs erkennen, gegebenenfalls mit einer Toleranz, damit auch bei schwankenden Startbedingungen der Start des Bewässerungsvorgangs erkannt werden kann. Zum Anlernen von Endwerten von Druck und Durchfluss können am Ende eines Bewässerungsvorgangs in Form einer Bewässerungssequenz, wenn die Zulaufarmatur geschlossen worden ist und der Druck aus dem Bewässerungssystem entwichen ist, die in diesem Moment gemessenen Werte für Durchfluss und Druck durch manuellen Befehl, beispielsweise durch Drücken eines Anlernknopfes, gespeichert werden. In Zukunft kann die Auswerteelektronik der jeweiligen Vorrichtung dann bei Erreichen der so gespeicherten Werte das Ende eines Bewässerungsvorgangs in Form einer Bewässerungssequenz erkennen, gegebenenfalls mit einer Toleranz, damit auch bei schwankenden Bedingungen das Ende des Bewässerungsvorgangs sicher erkannt werden kann.

Alternativ oder additiv kann die Auswerteelektronik eingerichtet sein, in einem Anlernmodus betrieben zu werden, in dem die Auswerteelektronik während eines Startzeitraums des Bewässerungsvorgangs und/oder eines Endzeitraums des Bewässerungsvorgangs wenigstens einen gemessenen Druckwert und/oder wenigstens einen gemessenen Durchflusswert elektronisch speichert. Zum Anlernen der Werte (Startwerte) von Druck und Durchfluss kann der Zulauf geöffnet werden. Die einzelnen Auslasseinheiten zugeordneten Vorrichtungen, die den Start des Bewässerungsvorgangs nicht durch die überwachten Werte für Druck und/oder Durchfluss erkennen, können durch einen manuellen Befehl, wie beispielsweise durch Drücken eines Anlernknopfes, die während des Starts des Bewässerungsvorgangs an der jeweiligen Stelle des Bewässerungssystems herrschenden Werte speichern. In Zukunft kann die Auswerteelektronik der jeweiligen Vorrichtung dann bei Erreichen der gespeicherten Startwerte den Start eines Bewässerungsvorgangs erkennen, gegebenenfalls mit einer Toleranz, damit auch bei schwankenden Startbedingungen der Start des Bewässerungsvorgangs erkannt werden kann. Zum Anlernen von Werten (Endwerte) von Druck und Durchfluss können am Ende eines Bewässerungsvorgangs in Form einer Bewässerungssequenz, wenn die Zulaufarmatur geschlossen worden ist und der Druck aus dem Bewässerungssystem entwichen ist, die in diesem Moment gemessenen Werte für Durchfluss und Druck durch manuellen Befehl, beispielsweise durch Drücken eines Anlernknopfes, gespeichert werden. **In** Zukunft kann die Auswerteelektronik der jeweiligen Vorrichtung dann bei Erreichen der so gespeicherten Endwerte das Ende eines Bewässerungsvorgangs in Form einer Bewässerungssequenz erkennen, gegebenenfalls mit einer Toleranz, damit auch bei schwankenden Bedingungen das Ende des Bewässerungsvorgangs sicher erkannt werden kann.

Gemäß einer weiteren vorteilhaften Ausgestaltung ist die Auswerteelektronik eingerichtet, in einem Überwachungsmodus betrieben zu werden, in dem die Auswerteelektronik die Messsignale der Druckmesseinrichtung und der Durchflussmesseinrichtung mit einer vorgegebenen Abfolge von Druck- und/oder Durchflussschwankungen vergleicht und bei einer Abweichung der Messsignale der Druckmesseinrichtung und der Durchflussmesseinrichtung von der vorgegebenen Abfolge von Druck- und/oder Durchflussschwankungen um ein vorgegebenes Ausmaß ein Fehlersignal erzeugt. Beispielsweise würde ein abgeplatzter oder abgeknickter Schlauch oder ein klemmender Versenkregner zu einer Abweichung der aktuellen Werte von den Werten, die in der Abfolge von Druck- und/oder Durchflussschwankungen gespeichert sind, führen. In so einem Fall könnte die jeweilige Vorrichtung den Fehler erkennen und das Fehlersignal erzeugen und ausgeben. Das Fehlersignal kann beispielsweise zum Auslösen eines optischen und/oder akustischen Alarm und/oder zum Schalten einer zugeordneten Auslasseinheit verwendet werden, um einen Wasserverlust oder Schaden durch unkontrolliert austretendes Wasser zu verhindern. Wenn die Werte aller Durchflussmesseinrichtungen eines Bewässerungssystems genau erfasst und verglichen werden, kann man Undichtigkeiten des Bewässerungssystems berechnen und sogar feststellen, zwischen welchen Auslassvorrichtungen welche Menge Wasser verlorengeht.

Eine erfindungsgemäße Auslasseinheit für ein Bewässerungssystem, das wenigstens eine eingangsseitig mit einer betätigbaren Armatur verbundene Wasserhauptleitung aufweist, mit der die Auslasseinheit verbindbar und/oder in die die Auslasseinheit integrierbar ist, weist wenigstens eine Vorrichtung nach einer der oben genannten Ausgestaltungen oder einer Kombination von wenigstens zwei dieser Ausgestaltungen miteinander und wenigstens eine elektrisch betätigbare Ventileinrichtung, durch deren Betätigung Wasser aus der Wasserhauptleitung abzweigbar ist, auf, wobei die Auswerteelektronik zum elektrischen Betätigen der Ventileinrichtung ausgebildet ist.

Mit der Auslasseinheit sind die oben mit Bezug auf die Vorrichtung genannten Vorteile entsprechend verbunden. Die Auslasseinheit kann auch zwei oder mehr Ablassanschlüsse bzw. Auslässe aufweisen, die jeweils mit einem eigenen schaltbaren Ventil der Ventileinrichtung wahlweise sperrbar oder freigebbar sind. Die Ventileinrichtung kann in diesem Fall also drei oder mehr schaltbare Ventile aufweisen. Weist die Auslasseinheit zwei oder mehr Auslassanschlüsse bzw. Auslässe auf, die jeweils mittels eines eigenen Ventils der Ventileinrichtung wahlweise sperrbar oder freigebbar sind, können die Auslässe der Auslasseinheit unter Verwendung der Auswerteelektronik nacheinander zum Durchführen eine Bewässerungsvorgangs in Form einer Bewässerungsuntersequenz geöffnet und geschlossen werden, derart, dass erst dann, wenn eine Bewässerung über einen Auslass der Auslasseinheit abgeschlossen hat, eine Bewässerung über den nächsten Auslass der Auslasseinheit durchgeführt wird. Auch andere Bewässerungsabläufe können über eine in der Auswerteelektronik hinterlegte Software einfach realisiert werden.

Die Ventile der Ventileinrichtung können derart geschaltet sein, dass sie in einem Ruhezustand der Auslasseinheit bzw. eines damit ausgestatteten Bewässerungssystems geschlossen sind, so dass die Ventileinrichtung sowohl die Wasserhauptleitung als auch ihren wenigstens einen Auslass sperrt. Durch die vorzugsweise unabhängig voneinander schaltbaren Ventile der Ventileinrichtung kann der Auslass der Auslasseinheit beispielsweise erst dann geöffnet wird, wenn durch einen steigenden Druck in der Wasserhauptleitung erkannt wird, das der Zulauf bzw. die Zulaufarmatur geöffnet worden ist. Wenn an allen Auslasseinheiten eines entsprechend ausgebildeten Bewässerungssystems im Ruhezustand alle Auslässe und Wasserhauptleitungsdurchleitungen geschlossen sind, verhindert das das Leelaufen der Wasserhauptleitung. Durch ein solches Leerlaufen könnte Luft in das Bewässerungssystem eindringen, was später zu nachteiligen und zu vermeidenden Wasserschlägen führen könnte. Außerdem könnte Luft in dem Bewässerungssystem die Durchflussmessungen ungenau machen, wenn die Durchflussmesseinrichtung zunächst einen Luftstrom messen würde. Ferner käme es durch das Leerlaufen des Bewässerungssystems zu einer Wasserverschwendung, weil Wasser, das dabei beispielsweise aus angeschlossenen Regnern tropft, oft nicht die eigentlichen Pflanzen erreicht.

Gemäß einer vorteilhaften Ausgestaltung sind die Druckmesseinrichtung und/oder die Durchflussmesseinrichtung bezüglich einer Wasserströmung durch die Auslasseinheit der Ventileinrichtung vorgeschaltet angeordnet. Hierdurch erfolgen die Messungen von Druck und Durchfluss an optimalen Positionen, insbesondere um die oben beschriebenen vielfältigen Funktionen einzeln oder in Kombination von wenigstens zwei dieser Funktionen miteinander realisieren zu können.

Gemäß einer weiteren vorteilhaften Ausgestaltung weist die Ventileinrichtung ein in einem Hauptleitungsabschnitt der Auslasseinheit oder in der Wasserhauptleitung anordbares Hauptventil zum Öffnen und Schließen des Hauptleitungsabschnitts bzw. der Wasserhauptleitung und ein in einer von dem Hauptleitungsabschnitt abzweigenden Auslassleitung anordbares Auslassventil auf. Das Hauptventil ist vorzugsweise ein schaltbares Ventil, beispielsweise Mehrwegventil, mit dem der Durchfluss durch die Wasserhauptleitung wahlweise sperrbar oder freigebbar ist. Das Auslassventil ist vorzugsweise ebenfalls ein schaltbares Ventil, beispielsweise Mehrwegventil, mit dem eine Ableitung von Wasser aus der Wasserhauptleitung über einen Auslass der Auslasseinheit wahlweise sperrbar oder freigebbar ist. Die Ventileinrichtung kann für jede Auslassleitung ein eigenes Auslassventil aufweisen.

Gemäß einer weiteren vorteilhaften Ausgestaltung weist die Auslasseinheit wenigstens eine Bypass-Leitung mit einem Rückschlagventil auf, die bezüglich einer Wasserströmung durch das Hauptventil vor dem Hauptventil und nach dem Hauptventil mit dem Hauptleitungsabschnitt der Auslasseinheit verbunden ist. Diese Ausgestaltung ist vor allem sinnvoll, wenn das Hauptventil der Ventileinrichtung ein in beide Richtungen dicht schließendes Ventil ist. Die Bypass-Leitung mit dem Rückschlagventil kann ein Zurückfließen des Wassers und damit eine Druckentlastung des gesamten Bewässerungssystems ermöglichen, selbst für den Fall, dass einzelne Auslasseinheiten bzw. deren Vorrichtungen das Ende eines Bewässerungsvorgangs in Form einer Bewässerungssequenz fälschlicherweise zu früh ermittelt haben. Die Bypass-Leitung mit dem Rückschlagventil kann ein Zurückfließen des Wassers und damit eine Druckentlastung des gesamten Bewässerungssystems auch dann ermöglichen, wenn alle Auslasseinheiten bzw. deren Vorrichtungen das Ende eines Bewässerungsvorgangs in Form einer Bewässerungssequenz richtig ermittelt haben, jedoch die Auslasseinheiten in einer Reihenfolge schalten, bei der ein Teil der Wasserhauptleitung nicht von der Druckentlastung betroffen ist.

Gemäß einer weiteren vorteilhaften Ausgestaltung ist die Auswerteelektronik eingerichtet, das Hauptventil nach einer vorgegebenen Zeit nach einem Öffnen des Auslassventils zu schließen und/oder Auslassventil nach einer vorgegebenen Zeit nach einem Öffnen des Hauptventils zu schließen. Hierbei sind das Hauptventil und das Auslassventil unabhängig voneinander schaltbare Ventile. Dies macht es möglich, mittels der Auswerteelektronik das Hauptventil und das Auslassventil einzeln und unabhängig voneinander anzusteuern. Dann kann man beim Umschalten von Auslass auf Durchlass eine zeitliche Überschneidung der Öffnungszuständen von Hauptventil und Auslassventil der Auslasseinheit verwirklicht werden, um Wasserschläge im Bewässerungssystem zu reduzieren. Alternativ können die Öffnungszustände von Hauptventil und Auslassventil mittels der Auswerteelektronik nacheinander mit einem zeitlichen Abstand realisiert werden, so dass beispielsweise die Werte eines Wasserzählers am Einlass bzw. Zulauf des Bewässerungssystems genau dem Auslass und dem Durchlauf zugeordnet werden können.

An der am weitesten von der Zulaufarmatur entfernt angeordneten letzten Auslasseinheit an der Wasserhauptleitung kann dann am Durchlass bzw. dem Ausgang des Hauptleitungsabschnitts beispielsweise ein Rasensprenger angeschlossen werden. Dann wird in diesem Fall auch der Durchlass dieser Auslasseinheit, der bei den übrigen Auslasseinheiten zum Weiterleiten von Wasser zur jeweils nächsten Auslasseinheit verwendet wird, als Bewässerungsauslass verwendet. Mit Ablauf einer bestimmten Zeit oder nach Abgabe einer bestimmten Durchflussmenge oder durch einen anderen Auslöser kann der Durchlass dieser letzten Auslasseinheit mittels ihres Hauptventils geschlossen werden, so dass dann Durchlass und Auslass der letzten Auslasseinheit geschlossen sind. Bei unabhängig steuerbaren Ventilen der Ventileinrichtung können also alle Ausgänge einer Auslasseinheit für eine Bewässerung genutzt werden. Es könnte beispielsweise eine Wasserhauptleitung von irgendwo her in einen Garten gelegen werden und dort das Wasser nacheinander auf die Auslasseinheiten verteilen. Wenn das Wasser an der Zulaufarmatur abgestellt wird, sollte die Vorrichtung das Ende der Bewässerung erkennen, damit eine spätere erneute Bewässerung, beispielsweise am selben oder nächsten Tag, von vorne beginnen kann.

Gemäß einer weiteren vorteilhaften Ausgestaltung ist die Auswerteelektronik eingerichtet, das Hauptventil und/oder das Auslassventil erst dann zu öffnen, wenn ein Messignal der Druckmesseinrichtung über einem vorgegebenen Mindestdruckwert liegt. Hierdurch wird sichergestellt, dass der für die jeweilig gewünschte Bewässerung erforderliche Druck bereits zu Beginn der Bewässerung anliegt.

Gemäß einer weiteren vorteilhaften Ausgestaltung weist die Auslasseinheit wenigstens eine dem Auslassventil nachgeschaltet angeordnete zusätzliche Durchflussmesseinrichtung auf. Hierdurch wird eine Rationierung von Wasser mittels des Bewässerungssystems mit mehreren angeschlossenen Verbrauchern möglich gemacht. Die zusätzliche Durchflussmesseinrichtung kann beispielsweise an einem oben genannten Anschluss der Auswerteelektronik für externe elektrische Geräte angeschlossen werden oder über eine kabellose Verbindung mit der Auswerteelektronik verbunden werden.

Die Funktion der zuletzt genannten Ausgestaltung wird nachfolgend am Beispiel einer Schrebergartenanlage mit mehreren Parzellen beschrieben.

Die Auswerteelektronik kann zunächst die Ventile der Ventileinrichtung einer Auslasseinheit offenhalten. Nach Durchfluss einer bestimmten Menge Wasser durch die zusätzliche Durchflussmesseinrichtung der Auslasseinheit kann das Auslassventil geschlossen werden. Dieser Vorgang kann für jede entsprechend ausgebildete Auslasseinheit des Bewässerungssystems durchgeführt werden. Danach ist eine Manipulation am Bewässerungssystem durch eigenmächtiges Ändern von Einstellungen der jeweiligen Auslasseinheit oder Entfernen der zusätzlichen Durchflussmesseinrichtung feststellbar.

Besteht beispielsweise ein Verdacht auf Manipulation, beispielsweise wenn die Summe der gezählten Verbräuche an den Auslasseinheiten kleiner ist als die Menge, die an der Durchflussmesseinrichtung der ersten Auslasseinheit gemessen wurde, kann aus der Differenz der Messwerte der Durchflussmesseinrichtungen der Auslasseinheiten der Verbrauch für jede Parzelle zusätzlich zu den zusätzlichen Durchflussmesseinrichtungen nachgewiesen werden.

Die zusätzlichen Durchflussmesseinrichtungen bzw. deren Messwerte können dazu verwendet werden, die Wasserzufuhr zu der jeweiligen Parzelle abzustellen, wenn das private Kontingent verbraucht worden ist. Das reine Erfassen der einzelnen Verbräuche wäre auch ohne diese zusätzlichen Durchflussmesseinrichtungen möglich. Selbst wenn eine der Auslasseinheiten komplett demontiert worden ist, um Wasser ungezählt zu entnehmen, kann der Verbrauch noch nachgewiesen werden. Mit den Zählerständen der vorher und der nachher belieferten Auslasseinheiten kann der tatsächliche Verbrauch der manipulierten Stelle ermittelt werden. Das ist gewissermaßen eine "doppelte Buchführung" für Wasserverbrauch. Es müssten schon mehrere Nutzer aufeinanderfolgender Auslasseinheiten ihre Auslasseinheiten komplett ausbauen, damit der Verbrauch nicht mehr zugeordnet werden kann. Die Manipulation selbst ließe sich aber wegen der nicht mehr konsistenten Zählerstände des manipulierten Bewässerungssystems immer noch nachweisen.

Gemäß einer weiteren vorteilhaften Ausgestaltung ist die Auswerteelektronik eingerichtet, die Ventileinrichtung derart zu betätigen, dass ein vorgegebener Druck in der Wasserhauptleitung gegeben ist, und aus den Messsignalen der Durchlaufmesseinrichtung eine in einem vorgegebenen Zeitraum zur Verfügung stehende Wassermenge zu ermitteln. Der vorgegebene Druck kann unter Verwendung eines vorgegebenen gewünschten Druckwerts durch eine Ansteuerung des Hauptventils der Auslasseinheit mittels der Auswerteelektronik der Auslasseinheit eingestellt und gehalten werden.

Gemäß einer weiteren vorteilhaften Ausgestaltung ist die Auswerteelektronik eingerichtet, die Ventileinrichtung derart zu betätigen, dass ein vorgegebener Wasserdurchfluss durch die Wasserhauptleitung gegeben ist, und aus den Messsignalen der Druckmesseinrichtung einen Druck zu ermitteln, mit dem in einem vorgegebenen Zeitraum eine bestimmte Wassermenge abgegeben werden kann. Der vorgegebene Durchfluss kann unter Verwendung eines vorgegebenen gewünschten Durchflusswerts durch eine Ansteuerung des Hauptventils der Auslasseinheit mittels der Auswerteelektronik der Auslasseinheit eingestellt und gehalten werden.

Ein erfindungsgemäßes Bewässerungssystem weist eine eingangsseitig mit einer betätigbaren Armatur verbundene Wasserhauptleitung und wenigstens eine mit der Wasserhauptleitung verbundene und/oder in die Wasserhauptleitung integrierte Auslasseinheit auf, wobei die Auslasseinheit nach einer der oben genannten Ausgestaltungen oder einer Kombination von wenigstens zwei dieser Ausgestaltungen miteinander ausgebildet ist.

Mit dem Bewässerungssystem sind die oben mit Bezug auf die Auslasseinheit bzw. die Vorrichtung genannten Vorteile entsprechend verbunden. Das Bewässerungssystem kann auch zwei oder mehr Auslasseinheiten aufweisen, wobei jede Auslasseinheit des Bewässerungssystems nach einer der oben genannten Ausgestaltungen oder einer Kombination von wenigstens zwei dieser Ausgestaltungen miteinander ausgebildet sein kann.

In einer Ausführungsvariante können die Auslasseinheiten bzw. deren Vorrichtungen datentechnisch vernetzt sein. Durch eine solche Vernetzung können die Auslasseinheiten zentral steuerbar und/oder regelbar sein, was eine größtmögliche Kontrolle über das gesamte Bewässerungssystem ermöglichen würde. Dann könnten die Auslasseinheiten in Reihe an einer einzigen Wasserhauptleitung angeordnet werden, müssten es aber nicht. Auslasseinheiten könnten stattdessen dann auch an Abzweigen und sogar in herkömmlichen zentralen Verteilerboxen eingesetzt werden und wie normale ferngesteuerte Ventile geschaltet werden. Weil zusätzlich zu der Ventilfunktion der Auslasseinheiten von jeder Auslasseinheit Daten zu Druck und Durchfluss ermittelt werden, könnte eine zentrale Steuerung und/oder Regelung auch hier Anomalien im Bewässerungssystem erfassen, auswerten und entsprechend reagieren.

Gemäß einem erfindungsgemäßen Verfahren zum Betreiben eines Bewässerungssystems, das wenigstens eine eingangsseitig mit einer betätigbaren Armatur verbundene Wasserhauptleitung und wenigstens eine mit der Wasserhauptleitung verbundene und/oder in die Wasserhauptleitung integrierte Auslasseinheit aufweist, wird ein Druck in der Wasserhauptleitung gemessen, ein Wasserdurchfluss durch die Wasserhauptleitung gemessen und ein Endsignal, das ein Ende eines mit dem Bewässerungssystem durchgeführten Bewässerungsvorgangs signalisiert, erzeugt, wenn der Druck in der Wasserhauptleitung und der Wasserdurchfluss durch die Wasserhauptleitung gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht.

Mit dem Verfahren sind die oben mit Bezug auf das Bewässerungssystem bzw. die Auslasseinheit bzw. die Vorrichtung genannten Vorteile entsprechend verbunden. Insbesondere kann das Bewässerungssystem bzw. die Auslasseinheit bzw. die Vorrichtung gemäß einer der oben genannten Ausgestaltungen oder einer Kombination von wenigstens zwei dieser Ausgestaltungen miteinander zur Durchführung des Verfahrens verwendet werden.

Im Folgenden wird die Erfindung unter Bezugnahme auf die beigefügten Figuren anhand bevorzugter Ausführungsformen beispielhaft erläutert, wobei die nachfolgend erläuterten Merkmale sowohl jeweils für sich genommen als auch in unterschiedlicher Kombination miteinander einen vorteilhaften und/oder weiterbildenden Aspekt der Erfindung darstellen können.

### Kurze Beschreibung der Figuren

Es zeigt:
- Fig. 1: eine schematische Darstellung eines Ausführungsbeispiels für eine erfindungsgemäße Auslasseinheit;
- Fig. 2: eine schematische Darstellung eines weiteren Ausführungsbeispiels für eine erfindungsgemäße Auslasseinheit;
- Fig. 3: eine schematische Darstellung eines Ausführungsbeispiels für ein erfindungsgemäßes Bewässerungssystem;
- Fig. 4: eine schematische Darstellung eines weiteren Ausführungsbeispiels für ein erfindungsgemäßes Bewässerungssystem;
- Fig. 5: eine schematische Darstellung eines weiteren Ausführungsbeispiels für ein erfindungsgemäßes Bewässerungssystem; und
- Fig. 6: eine schematische Darstellung eines weiteren Ausführungsbeispiels für ein erfindungsgemäßes Bewässerungssystem.

### Ausführliche Beschreibung der Figuren

In den Figuren sind gleiche bzw. funktionsgleiche Bauteile mit denselben Bezugszeichen versehen. Eine wiederholte Beschreibung solcher Bauteile kann nachfolgend zur Vermeidung von unnötigen Wiederholungen im Einzelnen weggelassen sein.

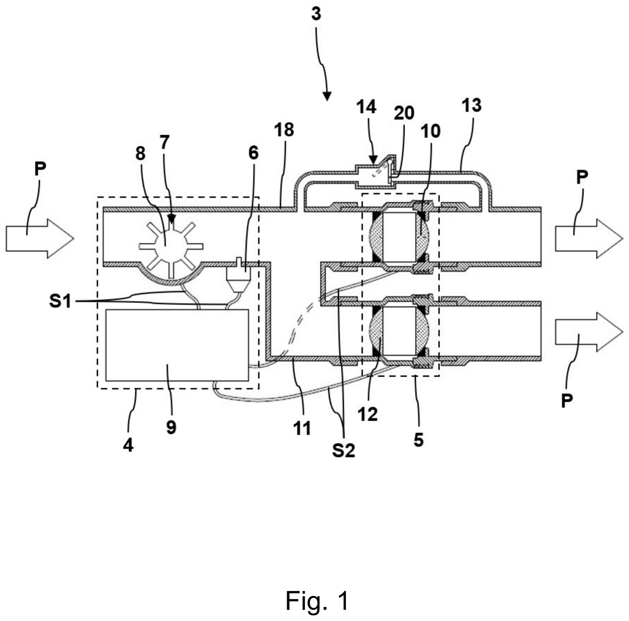

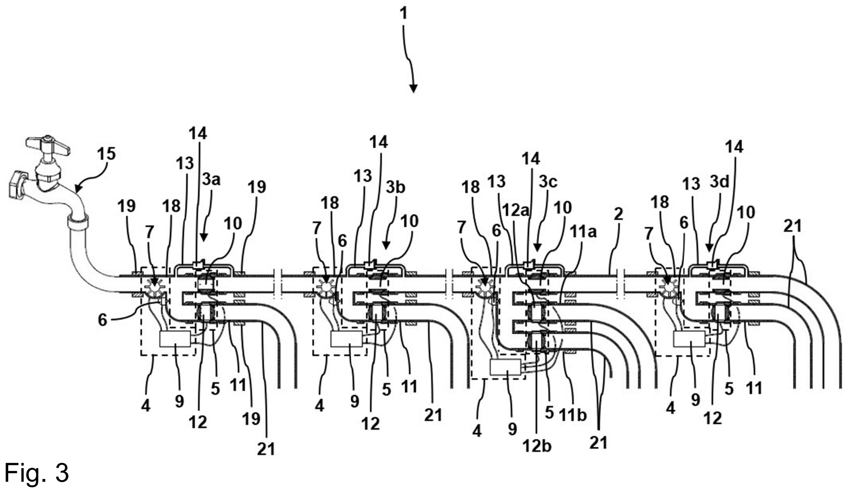

Fig. 1 zeigt eine schematische Darstellung eines Ausführungsbeispiels für eine erfindungsgemäße Auslasseinheit 3 für ein nicht in Fig. 1 gezeigtes Bewässerungssystem, das wenigstens eine eingangsseitig mit einer nicht in Fig. 1 gezeigten, betätigbaren Armatur, auch Zulaufarmatur genannt, verbundene, nicht in Fig. 1 gezeigte Wasserhauptleitung aufweist, in die die Auslasseinheit 3 über in den Fign. 3 bis 6 angedeutete Kopplungseinheiten integrierbar ist Wasser kann entsprechend den Pfeilen P durch die Auslasseinheit 3 geleitet werden. Das Bewässerungssystem kann beispielsweise entsprechend Fig. 3, 4, 5 oder 6 ausgebildet sein.

Die Auslasseinheit 3 weist eine Vorrichtung 4 zum Ermitteln eines Endes eines Bewässerungsvorgangs des Bewässerungssystems auf. Des Weiteren weist die Auslasseinheit 3 eine elektrisch betätigbare Ventileinrichtung 5 auf, durch deren Betätigung Wasser aus der Wasserhauptleitung abzweigbar ist.

Die Vorrichtung 4 weist eine an der Auslasseinheit 3 angeordnete Druckmesseinrichtung 6 auf, mit der ein Druck in der Wasserhauptleitung 2 messbar ist. Die Druckmesseinrichtung 6 ist als elektronische Druckmesseinrichtung ausgebildet. Die Druckmesseinrichtung 6 ist in einem Hauptleitungsabschnitt 18 der Auslasseinheit 3 angeordnet, der eingangsseitig und ausgangsseitig kommunizierend mit der Wasserhauptleitung des Bewässerungssystems verbunden werden kann.

Zudem weist die Vorrichtung 4 eine an der Auslasseinheit 3 angeordnete Durchflussmesseinrichtung 7 auf, mit der ein Wasserdurchfluss durch die Wasserhauptleitung 2 messbar ist. Die Durchflussmesseinrichtung 7 ist als elektronisches Durchflusszähler mit einem in der Auslasseinheit 3 angeordneten Schaufelrad 8 ausgebildet. Auch die Durchflussmesseinrichtung 7 ist in dem Hauptleitungsabschnitt 18 der Auslasseinheit 3 angeordnet.

Die Druckmesseinrichtung 6 und die Durchflussmesseinrichtung 7 sind bezüglich einer durch die Pfeile P angedeuteten Wasserströmung durch die Auslasseinheit 3 der Ventileinrichtung 5 vorgeschaltet angeordnet. Zudem ist die Durchflussmesseinrichtung 7 der Druckmesseinrichtung 6 vorgeschaltet angeordnet. Alternativ kann die Durchflussmesseinrichtung 7 der Druckmesseinrichtung 6 nachgeschaltet angeordnet sein.

Darüber hinaus weist die Vorrichtung 4 eine Auswerteelektronik 9 auf, die eingerichtet ist, aus Messsignalen der Druckmesseinrichtung 6 und der Durchflussmesseinrichtung 7 zu ermitteln, ob der Druck in der Wasserhauptleitung 2 und der Wasserdurchfluss durch die Wasserhauptleitung 2 gleichzeitig fallen und/oder jeweils unter einem jeweilig vorgegebenen Mindestgrenzwert liegen und/oder ob ein Druckverlauf und/oder ein Durchflussverlauf einer vorgegebenen Endabfolge von Druck- und/oder Durchflussschwankungen entsprechen bzw. entspricht, und ein elektrisches Endsignal zu erzeugen, wenn der Druck in der Wasserhauptleitung 2 und der Wasserdurchfluss durch die Wasserhauptleitung 2 gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht. Hierzu ist die Auswerteelektronik 9 über Signalverbindungen S1 mit der Druckmesseinrichtung 6 und der Durchflussmesseinrichtung 7 verbunden.

Die Auswerteelektronik 9 kann zudem eingerichtet sein, aus Messsignalen der Druckmesseinrichtung 6 und der Durchflussmesseinrichtung 7 zu ermitteln, ob der Druck in der Wasserhauptleitung 2 und der Wasserdurchfluss durch die Wasserhauptleitung 2 gleichzeitig steigen und/oder jeweils über einem jeweilig vorgegebenen Startgrenzwert liegen und/oder ob der Druckverlauf und/oder der Durchflussverlauf einer vorgegebenen Startabfolge von Druck- und/oder Durchflussschwankungen entsprechen bzw. entspricht, und ein elektrisches Startsignal zu erzeugen, wenn der Druck in der Wasserhauptleitung 2 und der Wasserdurchfluss durch die Wasserhauptleitung 2 gleichzeitig steigen und/oder jeweils über dem jeweilig vorgegebenen Startgrenzwert liegen und/oder wenn der Druckverlauf und/oder der Durchflussverlauf der vorgegebenen Startabfolge von Druck- und/oder Durchflussschwankungen entsprechen bzw. entspricht.

Die Ventileinrichtung 5 weist ein in dem Hauptleitungsabschnitt 18 der Auslasseinheit 3 angeordnetes, in einem Schließzustand gezeigtes Hauptventil 10, das auch als Durchlassventil bezeichnet werden kann, zum Öffnen und Schließen des Hauptleitungsabschnitts 18 und dadurch der daran angeschlossenen Wasserhauptleitung und ein in einer von dem Hauptleitungsabschnitt 18 abzweigenden Auslassleitung 11 angeordnetes, in einem Schließzustand gezeigtes Auslassventil 12, das auch als Bewässerungsventil bezeichnet werden kann, auf.

Die Auswerteelektronik 9 ist eingerichtet, die Ventileinrichtung 5 elektrisch zu betätigen. Insbesondere ist die Auswerteelektronik 9 eingerichtet, das Hauptventil 10 und das Auslassventil 12 elektrisch zu betätigen. Hierzu ist die Auswerteelektronik 9 über Steuerleitungen S2 mit dem Hauptventil 10 und dem Auslassventil 12 verbunden.

Die Auswerteelektronik 9 kann eingerichtet sein, das Hauptventil 10 nach einer vorgegebenen Zeit nach einem Öffnen des Auslassventils 12 zu schließen und/oder Auslassventil 12 nach einer vorgegebenen Zeit nach einem Öffnen des Hauptventils 10 zu schließen. Zudem kann die Auswerteelektronik 9 eingerichtet sein, das Hauptventil 10 und/oder das Auslassventil 12 erst dann zu öffnen, wenn ein Messignal der Druckmesseinrichtung 6 über einem vorgegebenen Mindestdruckwert liegt.

Die Vorrichtung 4 weist zudem wenigstens eine mit der Auswerteelektronik 9 verbundene, nicht gezeigte Mensch-Maschine-Schnittstelle, beispielsweise einen Touchscreen, und wenigstens eine mit der Auswerteelektronik 9 verbundene, nicht gezeigte Anzeigeeinheit auf. Des Weiteren weist die Vorrichtung 4 wenigstens eine nicht gezeigte eigene elektrische Energiequelle auf.

Die Auswerteelektronik 9 kann eine Zeitmessfunktion und/oder eine Uhrfunktion und/oder eine Kalenderfunktion aufweisen.

Die Vorrichtung 4 kann wenigstens ein mit der Auswerteelektronik 9 verbundenes, nicht gezeigtes Funkmodul und/oder wenigstens ein mit der Auswerteelektronik 9 verbundenes, nicht gezeigtes Netzwerkmodul und/oder wenigstens einen nicht gezeigten Anschluss zum Anschließen einer nicht gezeigten externen elektrischen Einrichtung an die Vorrichtung 4 aufweisen.

Die Auswerteelektronik 9 kann eingerichtet sein, die Ventileinrichtung 5 derart zu betätigen, dass ein vorgegebener Druck in der Wasserhauptleitung 2 gegeben ist, und aus den Messsignalen der Durchlaufmesseinrichtung 7 eine in einem vorgegebenen Zeitraum zur Verfügung stehende Wassermenge zu ermitteln. Alternativ oder additiv kann die Auswerteelektronik 9 eingerichtet sein, die Ventileinrichtung 5 derart zu betätigen, dass ein vorgegebener Wasserdurchfluss durch die Wasserhauptleitung 2 gegeben ist, und aus den Messsignalen der Druckmesseinrichtung 6 einen Druck zu ermitteln, mit dem in einem vorgegebenen Zeitraum eine bestimmte Wassermenge abgegeben werden kann.

Zudem kann die Auswerteelektronik 9 eingerichtet sein, in einem Anlernmodus betrieben zu werden, in dem die Auswerteelektronik 9 während eines Endzeitraums eines mit dem Bewässerungssystem durchgeführten Bewässerungsvorgangs, beispielsweise in Form einer Bewässerungssequenz, eine Abfolge von Druck- und/oder Durchflussschwankungen elektronisch speichert.

Darüber hinaus kann die Auswerteelektronik 9 eingerichtet sein, in einem Überwachungsmodus betrieben zu werden, in dem die Auswerteelektronik 9 die Messsignale der Druckmesseinrichtung 6 und der Durchflussmesseinrichtung 7 mit einer vorgegebenen Abfolge von Druck- und/oder Durchflussschwankungen vergleicht und bei einer Abweichung der Messsignale der Druckmesseinrichtung 6 und der Durchflussmesseinrichtung 7 von der vorgegebenen Abfolge von Druck- und/oder Durchflussschwankungen um ein vorgegebenes Ausmaß ein Fehlersignal erzeugt.

Die Auslasseinheit 3 weist zudem eine Bypass-Leitung 13 mit einem Rückschlagventil 14 auf, die bezüglich einer Wasserströmung durch das Hauptventil 10 vor dem Hauptventil 10 und nach dem Hauptventil 10 mit dem Hauptleitungsabschnitt 18 der Auslasseinheit 3 verbunden ist. Das Rückschlagventil 14 weist eine schwenkbar angeordnete Rückschlagklappe 20 auf, die in Richtung der durch durchgezogene Linien gezeigte Schließstellung vorgespannt ist. Eine Offenstellung der Rückschlagklappe 20 ist durch gestrichelte Linien angedeutet. Das Rückschlagventil 14 kann auch anders ausgebildet sein und beispielsweise eine in eine Schließstellung federbelastete Kugel oder dergleichen aufweisen.

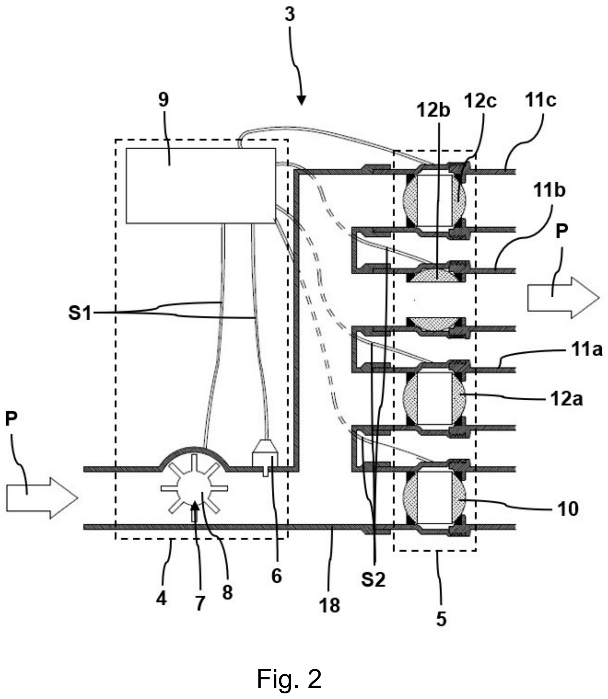

Fig. 2 zeigt eine schematische Darstellung eines weiteren Ausführungsbeispiels für eine erfindungsgemäße Auslasseinheit 3 für ein nicht in Fig. 2 gezeigtes Bewässerungssystem, das wenigstens eine eingangsseitig mit einer nicht in Fig. 2 gezeigten, betätigbaren Armatur, auch Zulaufarmatur genannt, verbundene, nicht in Fig. 2 gezeigte Wasserhauptleitung aufweist, in die die Auslasseinheit 3 über in den Fign. 3 bis 6 angedeutete Kopplungseinheiten integrierbar ist. Wasser kann entsprechend den Pfeilen P durch die Auslasseinheit 3 geleitet werden. Das Bewässerungssystem kann beispielsweise entsprechend Fig. 3, 4, 5 oder 6 ausgebildet sein.

Die Vorrichtung 4 aus Fig. 2 unterscheidet sich von dem in Fig. 1 gezeigten Ausführungsbeispiel, dass keine Bypass-Leitung mit einem Rückschlagventil vorhanden ist. Eine solche Bypass-Leitung mit einem Rückschlagventil kann bei Bedarf aber problemlos ergänzt werden.

Des Weiteren unterscheidet sich die Vorrichtung 4 aus Fig. 2 von dem in Fig. 1 gezeigten Ausführungsbeispiel, dass drei Auslassleitungen 11 vorhanden sind, wobei die Ventileinrichtung 5 für jede Auslassleitung 11a bzw. 11b bzw. 11c ein eigenes Auslassventil 12a bzw. 12b bzw. 12c aufweist. Die Auslassventile 12a und 12c sind in Fig. 2 in ihren Schließzuständen gezeigt, während das Auslassventil 12b in einem Offenzustand gezeigt ist, in dem Wasser aus der Wasserhauptleitung 2 abgezweigt und über das Auslassventil 12b einer Bewässerung zugeführt wird.

Bezüglich Gemeinsamkeiten wird zur Vermeidung von Wiederholungen im Übrigen auf die obige Bescheidung zu Fig. 1 verwiesen.

Fig. 3 zeigt eine schematische Darstellung eines Ausführungsbeispiels für ein erfindungsgemäßes Bewässerungssystem 1 mit einer eingangsseitig mit einer automatisch oder manuell betätigbaren Armatur 15, auch Zulaufarmatur genannt, verbundene Wasserhauptleitung 2 und vier in Reihe mit der Wasserhauptleitung 2 verbundenen Auslasseinheiten 3a, 3b, 3c und 3d.

Die Auslasseinheiten 3a, 3b und 3d entsprechen der in Fig. 1 gezeigten Auslasseinheit. Zur Vermeidung von Wiederholungen wird daher bezügliche der Auslasseinheiten 3a, 3b und 3d auf die obige Beschreibung zu Fig. 1 verwiesen. Bei der jeweiligen Auslasseinheit 3a bzw. 3b bzw. 3d ist das Hauptventil 10 in einem Offenzustand gezeigt und das Auslassventil 12 in einem Schließzustand gezeigt.

Die Auslasseinheit 3c unterscheidet sich allein dadurch von dem in Fig. 1 gezeigten Ausführungsbeispiel, dass zwei Auslassleitungen 11 vorhanden sind, wobei die Ventileinrichtung 5 für jede Auslassleitung 11 ein eigenes Auslassventil 12a bzw. 12b aufweist. Die Auslassventile 12a und 12b sind in Fig. 2 in ihren Schließzuständen gezeigt, während das Hauptventil 10 der Auslasseinheit 3c in seinem Offenzustand gezeigt ist.

Es wird gemäß Fig. 3 also über keine der Auslasseinheiten 3a, 3b, 3c und 3d Wasser über eine Auslassleitung 11 aus der Wasserhauptleitung 2 abgezweigt. Stattdessen wird das Wasser durch die Wasserhauptleitung 2 geleitet. Das aus der Auslasseinheit 3d bzw. die Wasserhauptleitung 2 austretende Wasser kann für eine gewünschte Bewässerung genutzt werden.

Jede Auslasseinheit 3a, 3b, 3c und 3d bzw. deren jeweiliger Hauptleitungsabschnitt 18 ist eingangsseitig über eine Kopplungseinheit 19 kommunizierend mit der Wasserhauptleitung 2 bzw. einem Abschnitt davon verbunden. Ausgangsseitig ist der jeweilige Hauptleitungsabschnitt 18 über eine weitere Kopplungseinheit 19 ebenfalls kommunizierend mit der Wasserhauptleitung 2 bzw. einem weiteren Abschnitt davon verbunden. Zudem ist die jeweilige Auslassleitung 11 ausgangsseitig über eine weitere Kopplungseinheit 19 kommunizierend mit jeweils einem Schlauch 21 verbunden.

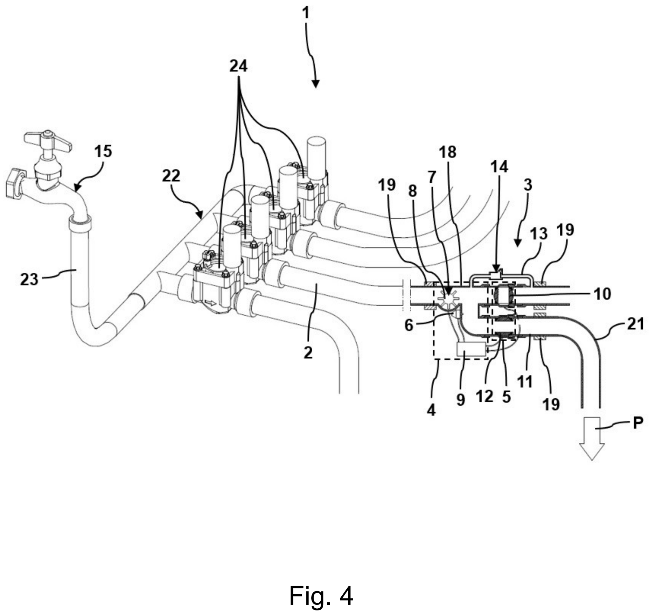

Fig. 4 zeigt eine schematische Darstellung eines weiteren Ausführungsbeispiels für ein erfindungsgemäßes Bewässerungssystem 1 mit einer eingangsseitig mit einer automatisch betätigbaren Armatur 24, auch Zulaufarmatur genannt, verbundene Wasserhauptleitung 2 und einer mit der Wasserhauptleitung 2 verbundenen Auslasseinheit 3.

Die Auslasseinheit 3 entspricht der in Fig. 1 gezeigten Auslasseinheit. Zur Vermeidung von Wiederholungen wird daher bezügliche der Auslasseinheit 3 auf die obige Beschreibung zu Fig. 1 verwiesen. Das Hauptventil 10 der Auslasseinheit 3 ist in Fig. 4 in einem Schließzustand gezeigt und das Auslassventil 12 in einem Offenzustand gezeigt. Es wird gemäß Fig. 4 also über die Auslasseinheit 3 Wasser über eine Auslassleitung 11 aus der Wasserhauptleitung 2 abgezweigt.

Das Bewässerungssystem 1 weist eine Verteilereinrichtung 22 auf, die eingangsseitig über eine Verbindungsleitung 23 kommunizierend mit einer manuell betätigbaren Zulaufarmatur 15 verbunden ist. Die Verteilereinrichtung 22 weist vier Auslassleitungen 24 auf, die in jeweils eine automatisch betätigbare Zulaufarmatur 24 münden, an denen die jeweilige Wasserabgabe über Schläuche 21 einstellbar ist.

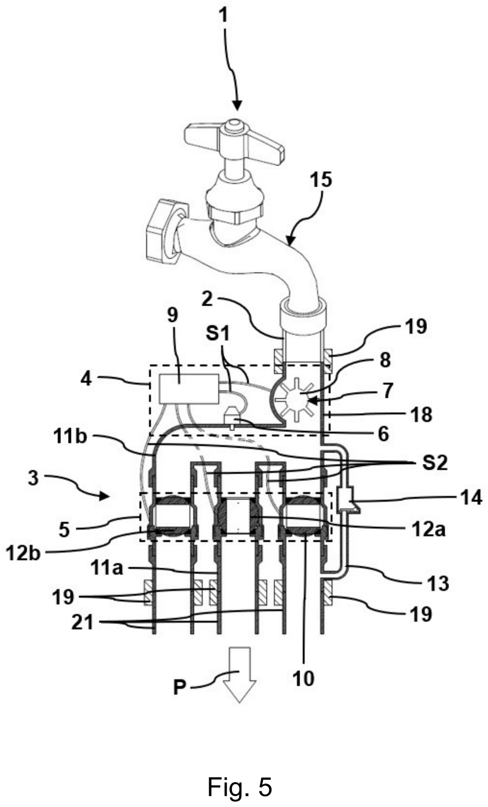

Fig. 5 zeigt eine schematische Darstellung eines weiteren Ausführungsbeispiels für ein erfindungsgemäßes Bewässerungssystem 1 mit einer eingangsseitig mit einer automatisch oder manuell betätigbaren Armatur 15, auch Zulaufarmatur genannt, verbundene Wasserhauptleitung 2 und einer mit der Wasserhauptleitung 2 verbundenen Auslasseinheit 3c.

Die Auslasseinheit 3c entspricht der in Fig. 3 gezeigten Auslasseinheit 3c. Zur Vermeidung von Wiederholungen wird daher bezügliche der Auslasseinheit 3c auf die obige Beschreibung zu Fig. 3 bzw. 1 verwiesen. Das Hauptventil 10 der Auslasseinheit 3c ist in Fig. 5 in einem Schließzustand gezeigt. Das Auslassventil 12a der Auslasseinheit 3c ist in Fig. 5 in einem Offenzustand gezeigt. Das Auslassventil 12b der Auslasseinheit 3c ist in Fig. 5 in einem Schließzustand gezeigt. Es wird gemäß Fig. 5 also über die Auslasseinheit 3c Wasser über die Auslassleitung 11a aus der Wasserhauptleitung 2 abgeführt.

Die Vorrichtung 4 kann eine nicht gezeigte, manuell betätigbare Taste oder dergleichen aufweisen, die mit der Auswerteelektronik 9 verbunden sein kann. Die Taste kann gedrückt und gedrückt gehalten werden, um eines der Auslassventile 12a und 12b zu öffnen, um einen Behälter, beispielsweise eine Gießkanne, mit Wasser zu befüllen. Sobald der Behälter wie gewünscht befüllt ist, kann die Taste losgelassen werden, wodurch das jeweilige Auslassventil 12a bzw. 12b wieder schließt. Die Auswerteelektronik 9 kann eingerichtet sein, während des Drückens der Taste mittels der Durchflussmesseinrichtung 7 die abgegebene Wassermenge oder die Wasserabgabezeit zu erfassen und diese Wassermenge bzw. Wasserabgabezeit zu speichern. Damit ist diese Wassermenge bzw. Wasserabgabezeit von der Auswerteelektronik 9 angelernt worden. Ab jetzt muss zum Befüllen des Behälters nur noch eine mit der Auswerteelektronik 9 verbundene, nicht gezeigte Befülltaste gedrückt werden, wodurch der Behälter automatisch mit der richtigen (gespeicherten) Wassermenge bzw. über die richtige (gespeicherten) Wasserabgabezeit befüllt wird. Hierbei kann die Auswerteelektronik 9 eingerichtet sein, während des Befüllens des Behälters die über die Durchflussmesseinrichtung 7 momentan erfasste abgegebene Wassermenge bzw. die momentan verstrichene Wasserabgabezeit zu ermitteln und mit der gespeicherten Wassermenge bzw. Wasserabgabezeit zu vergleichen und das Auslassventil 12a bzw. 12b zu schließen, wenn die momentan abgegebene Wassermenge bzw. die momentan verstrichene Wasserabgabezeit die gespeicherte Wassermenge bzw. Wasserabgabezeit erreicht. Ein Nutzer muss das Befüllen des Behälters nach dem vorbeschriebenen Anlernvorgang nicht überwachen.

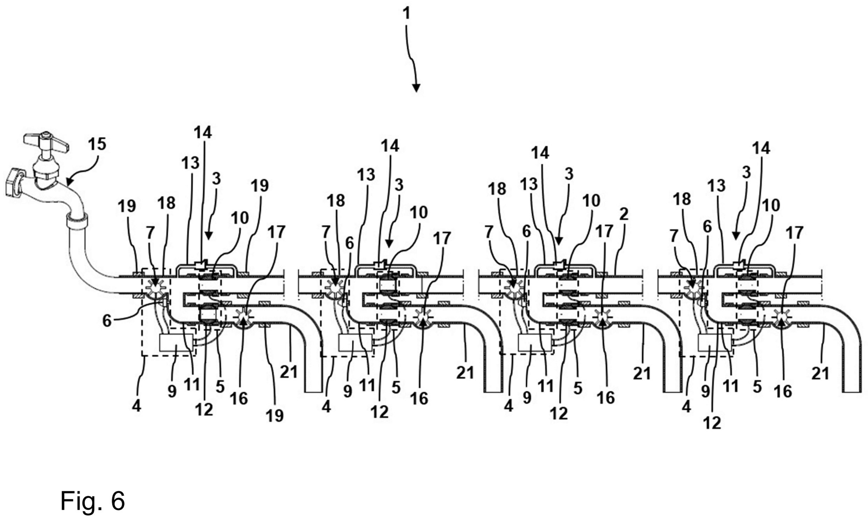

Fig. 6 zeigt eine schematische Darstellung eines weiteren Ausführungsbeispiels für ein erfindungsgemäßes Bewässerungssystem 1 mit einer eingangsseitig mit einer automatisch oder manuell betätigbaren Armatur 15, auch Zulaufarmatur genannt, verbundene Wasserhauptleitung 2 und vier in Reihe in die Wasserhauptleitung 2 integrierten Auslasseinheiten 3.

Jede Auslasseinheit 3 unterscheidet sich allein dadurch von dem in Fig. 1 gezeigten Ausführungsbeispiel, dass jede Auslasseinheit 3 eine dem Auslassventil 12 nachgeschaltet angeordnete zusätzliche Durchflussmesseinrichtung 16 mit einem in der jeweiligen Auslassleitung 11 angeordneten Schaufelrad 17 aufweist. Im Übrigen entsprechen die Auslasseinheiten 3 der in Fig. 1 gezeigten Auslasseinheit. Zur Vermeidung von Wiederholungen wird daher bezügliche der Auslasseinheiten 3 auf die obige Beschreibung zu Fig. 1 verwiesen.

Bei der jeweiligen Auslasseinheit 3 sind das Hauptventil 10 und das Auslassventil 12 in ihren Offenzuständen gezeigt. Es wird gemäß Fig. 6 also über jede Auslasseinheiten 3 Wasser über die jeweilige Auslassleitung 11 aus der Wasserhauptleitung 2 abgezweigt und gleichzeitig Wasser durch die Wasserhauptleitung 2 geführt.

### Bezugszeichenliste

- 1: Bewässerungssystem
- 2: Wasserhauptleitung
- 3: Auslasseinheit
- 3a: Auslasseinheit
- 3b: Auslasseinheit
- 3c: Auslasseinheit
- 3d: Auslasseinheit
- 4: Vorrichtung
- 5: Ventileinrichtung
- 6: Druckmesseinrichtung
- 7: Durchflussmesseinrichtung
- 8: Schaufelrad
- 9: Auswerteelektronik
- 10: Hauptventil
- 11: Auslassleitung
- 11a: Auslassleitung
- 11b: Auslassleitung
- 11c: Auslassleitung
- 12: Auslassventil
- 12a: Auslassventil
- 12b: Auslassventil
- 12c: Auslassventil
- 13: Bypass-Leitung
- 14: Rückschlagventil
- 15: Armatur
- 16: zusätzliche Durchflussmesseinrichtung
- 17: Schaufelrad
- 18: Hauptleitungsabschnitt von 3
- 19: Kopplungseinheit
- 20: Rückschlagklappe
- 21: Schlauch
- 22: Verteilereinrichtung
- 23: Verbindungsleitung
- 24: Zulaufarmatur
- P: Pfeil (Wasserströmung)
- S1: Signalleitung
- S2: Steuerleitung

## Patentansprüche

1. Vorrichtung (4) zum Ermitteln eines Endes eines Bewässerungsvorgangs eines Bewässerungssystems (1), das wenigstens eine eingangsseitig mit einer betätigbaren Armatur (15) verbundene Wasserhauptleitung (2) und wenigstens eine mit der Wasserhauptleitung (2) verbundene und/oder in die Hauptwasserleitung integrierte Auslasseinheit (3, 3a, 3b, 3c, 3d) aufweist, **gekennzeichnet durch** wenigstens eine an der Auslasseinheit (3, 3a, 3b, 3c, 3d) oder der Wasserhauptleitung (2) anordbare Druckmesseinrichtung (6), mit der ein Druck in der Wasserhauptleitung (2) messbar ist, wenigstens eine an der Auslasseinheit (3, 3a, 3b, 3c, 3d, 3e) oder der Wasserhauptleitung (2) anordbare Durchflussmesseinrichtung (7), mit der ein Wasserdurchfluss durch die Wasserhauptleitung (2) messbar ist, und wenigstens eine Auswerteelektronik (9), die eingerichtet ist, aus Messsignalen der Druckmesseinrichtung (6) und der Durchflussmesseinrichtung (7) zu ermitteln, ob der Druck in der Wasserhauptleitung (2) und der Wasserdurchfluss durch die Wasserhauptleitung (2) gleichzeitig fallen und/oder jeweils unter einem jeweilig vorgegebenen Mindestgrenzwert liegen und/oder ob ein Druckverlauf und/oder ein Durchflussverlauf einer vorgegebenen Endabfolge von Druck- und/oder Durchflussschwankungen entsprechen bzw. entspricht, und ein elektrisches Endsignal zu erzeugen, wenn der Druck in der Wasserhauptleitung (2) und der Wasserdurchfluss durch die Wasserhauptleitung (2) gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht.

2. Vorrichtung (4) nach Anspruch 1, **dadurch gekennzeichnet, dass** die Auswerteelektronik (9) eingerichtet ist, aus Messsignalen der Druckmesseinrichtung (6) und der Durchflussmesseinrichtung (7) zu ermitteln, ob der Druck in der Wasserhauptleitung (2) und der Wasserdurchfluss durch die Wasserhauptleitung (2) gleichzeitig steigen und/oder jeweils über einem jeweilig vorgegebenen Startgrenzwert liegen und/oder ob der Druckverlauf und/oder der Durchflussverlauf einer vorgegebenen Startabfolge von Druck- und/oder Durchflussschwankungen entsprechen bzw. entspricht, und ein elektrisches Startsignal zu erzeugen, wenn der Druck in der Wasserhauptleitung (2) und der Wasserdurchfluss durch die Wasserhauptleitung (2) gleichzeitig steigen und/oder jeweils über dem jeweilig vorgegebenen Startgrenzwert liegen und/oder wenn der Druckverlauf und/oder der Durchflussverlauf der vorgegebenen Startabfolge von Druck- und/oder Durchflussschwankungen entsprechen bzw. entspricht.

3. Vorrichtung (4) nach Anspruch 1 oder 2, **gekennzeichnet durch** wenigstens eine mit der Auswerteelektronik (9) verbundene Mensch-Maschine-Schnittstelle und/oder wenigstens eine mit der Auswerteelektronik (9) verbundene Anzeigeeinheit und/oder wenigstens eine elektrische Energiequelle und/oder wenigstens ein mit der Auswerteelektronik (9) verbundenes Funkmodul und/oder wenigstens ein mit der Auswerteelektronik (9) verbundene Netzwerkmodul und/oder wenigstens einen Anschluss zum Anschließen einer externen elektrischen Einrichtung an die Vorrichtung (4).

4. Vorrichtung (4) nach einem der Ansprüche 1 bis 3, **dadurch gekennzeichnet, dass** die Auswerteelektronik (9) eingerichtet ist, in einem Anlernmodus betrieben zu werden, in dem die Auswerteelektronik (9) während eines Startzeitraums des Bewässerungsvorgangs oder eines Endzeitraums des Bewässerungsvorgangs eine Abfolge von Druck- und/oder Durchflussschwankungen elektronisch speichert, und/oder dass die Auswerteelektronik (9) eingerichtet ist, in einem Überwachungsmodus betrieben zu werden, in dem die Auswerteelektronik (9) die Messsignale der Druckmesseinrichtung (6) und der Durchflussmesseinrichtung (7) mit einer vorgegebenen Abfolge von Druck- und/oder Durchflussschwankungen vergleicht und bei einer Abweichung der Messsignale der Druckmesseinrichtung (6) und der Durchflussmesseinrichtung (7) von der vorgegebenen Abfolge von Druck- und/oder Durchflussschwankungen um ein vorgegebenes Ausmaß ein Fehlersignal erzeugt.

5. Auslasseinheit (3, 3a, 3b, 3c, 3d) für ein Bewässerungssystem (1), das wenigstens eine eingangsseitig mit einer betätigbaren Armatur (15) verbundene Wasserhauptleitung (2) aufweist, mit der die Auslasseinheit (3, 3a, 3b, 3c, 3d, 3f) verbindbar und/oder in die die Auslasseinheit (3, 3a, 3b, 3c, 3d, 3e) integrierbar ist, **gekennzeichnet durch** wenigstens eine Vorrichtung (4) nach einem der Ansprüche 1 bis 4 und wenigstens eine elektrisch betätigbare Ventileinrichtung (5), durch deren Betätigung Wasser aus der Wasserhauptleitung (2) abzweigbar ist, wobei die Auswerteelektronik (9) zum elektrischen Betätigen der Ventileinrichtung (5) ausgebildet ist.

6. Auslasseinheit (3, 3a, 3b, 3c, 3d) nach Anspruch 5, **dadurch gekennzeichnet, dass** die Druckmesseinrichtung (6) und/oder die Durchflussmesseinrichtung (7) bezüglich einer Wasserströmung durch die Auslasseinheit (3, 3a, 3b, 3c, 3d) der Ventileinrichtung (5) vorgeschaltet angeordnet sind.

7. Auslasseinheit (3, 3a, 3b, 3c, 3d) nach Anspruch 5 oder 6, **dadurch gekennzeichnet, dass** die Ventileinrichtung (5) ein in einem Hauptleitungsabschnitt (18) der Auslasseinheit (3, 3a, 3b, 3c, 3d, 3e) oder in der Wasserhauptleitung (2) anordbares Hauptventil (10) zum Öffnen und Schließen des Hauptleitungsabschnitts (18) bzw. der Wasserhauptleitung (2) und ein in einer von dem Hauptableitungsabschnitt (18) abzweigenden Auslassleitung (11, 11a, 11b, 11c) anordbares Auslassventil (12, 12a, 12b, 12c) aufweist.

8. Auslasseinheit (3, 3a, 3b, 3c, 3d) nach Anspruch 7, **gekennzeichnet durch** wenigstens eine Bypass-Leitung (13) mit einem Rückschlagventil (14), die bezüglich einer Wasserströmung durch das Hauptventil (10) vor dem Hauptventil (10) und nach dem Hauptventil (10) mit dem Hauptleitungsabschnitt (18) der Auslasseinheit (3, 3a, 3b, 3c, 3d, 3e) verbunden ist.

9. Auslasseinheit (3, 3a, 3b, 3c, 3d) nach Anspruch 7 oder 8, **dadurch gekennzeichnet, dass** die Auswerteelektronik (9) eingerichtet ist, das Hauptventil (10) nach einer vorgegebenen Zeit nach einem Öffnen des Auslassventils (12) zu schließen und/oder Auslassventil (12) nach einer vorgegebenen Zeit nach einem Öffnen des Hauptventils (10) zu schließen.

10. Auslasseinheit (3, 3a, 3b, 3c, 3d) nach einem der Ansprüche 7 bis 9, **dadurch gekennzeichnet, dass** die Auswerteelektronik (9) eingerichtet ist, das Hauptventil (10) und/oder das Auslassventil (12) erst dann zu öffnen, wenn ein Messignal der Druckmesseinrichtung (6) über einem vorgegebenen Mindestdruckwert liegt.

11. Auslasseinheit (3, 3a, 3b, 3c, 3d) nach einem der Ansprüche 7 bis 10, **gekennzeichnet durch** wenigstens eine dem Auslassventil (12, 12a, 12b, 12c) nachgeschaltet angeordnete zusätzliche Durchflussmesseinrichtung (16).

12. Auslasseinheit (3, 3a, 3b, 3c, 3d) nach einem der Ansprüche 5 bis 11, **dadurch gekennzeichnet, dass** die Auswerteelektronik (9) eingerichtet ist, die Ventileinrichtung (5) derart zu betätigen, dass ein vorgegebener Druck in der Wasserhauptleitung (2) gegeben ist, und aus den Messsignalen der Durchlaufmesseinrichtung (7) eine in einem vorgegebenen Zeitraum zur Verfügung stehende Wassermenge zu ermitteln.

13. Auslasseinheit (3, 3a, 3b, 3c, 3d) nach einem der Ansprüche 5 bis 11, **dadurch gekennzeichnet, dass** die Auswerteelektronik (9) eingerichtet ist, die Ventileinrichtung (5) derart zu betätigen, dass ein vorgegebener Wasserdurchfluss durch die Wasserhauptleitung (2) gegeben ist, und aus den Messsignalen der Druckmesseinrichtung (6) einen Druck zu ermitteln, mit dem in einem vorgegebenen Zeitraum eine bestimmte Wassermenge abgegeben werden kann.

14. Bewässerungssystem (1) mit einer eingangsseitig mit einer betätigbaren Armatur (15) verbundene Wasserhauptleitung (2) und wenigstens einer mit der Wasserhauptleitung (2) verbundenen und/oder in die Wasserhauptleitung (2) integrierten Auslasseinheit (3, 3a, 3b, 3c, 3d), **dadurch gekennzeichnet, dass** die Auslasseinheit (3, 3a, 3b, 3c, 3d) nach einem der Ansprüche 5 bis 13 ausgebildet ist.

15. Verfahren zum Betreiben eines Bewässerungssystems (1), das wenigstens eine eingangsseitig mit einer betätigbaren Armatur (15) verbundene Wasserhauptleitung (2) und wenigstens eine mit der Wasserhauptleitung (2) verbundene und/oder in die Wasserhauptleitung (2) integrierte Auslasseinheit (3, 3a, 3b, 3c, 3d) aufweist, **dadurch gekennzeichnet, dass** ein Druck in der Wasserhauptleitung (2) gemessen wird, ein Wasserdurchfluss durch die Wasserhauptleitung (2) gemessen wird und ein Endsignal, das ein Ende eines mit dem Bewässerungssystem durchgeführten Bewässerungsvorgangs signalisiert, erzeugt wird, wenn der Druck in der Wasserhauptleitung (2) und der Wasserdurchfluss durch die Wasserhauptleitung (2) gleichzeitig fallen und/oder jeweils unter dem jeweilig vorgegebenen Mindestgrenzwert liegen und/oder wenn der Druckverlauf und/oder der Durchflussverlauf der vorgegebenen Endabfolge von Druck- und/oder Durchflussschwankungen entsprechen bzw. entspricht.
